(19) **Europäisches Patentamt / European Patent Office / Office européen des brevets**

(11) **EP 1 568 863 B1**

(12) **FASCICULE DE BREVET EUROPEEN**

(45) Date de publication et mention
de la délivrance du brevet:
**14.01.2009 Bulletin 2009/03**

(51) Int Cl.:
*F01N 3/08* (2006.01)    *F01N 3/20* (2006.01)
*F01N 11/00* (2006.01)

(21) Numéro de dépôt: **05300142.6**

(22) Date de dépôt: **23.02.2005**

(54) **Procédé de diagnostic pour un catalyseur de gaz d'echappement d'un moteur thermique et vehicule mettant en oeuvre ce procédé**

Verfahren zur Diagnose eines für Brennkraftmachinenabgase gedachten Katalysators und dessen Anwendung in einem Kraftfahrzeug

Method to diagnose a catalyst for exhaust gases of an internal engine and a vehicle using said method

(84) Etats contractants désignés:
**AT BE BG CH CY CZ DE DK EE ES FI FR GB GR HU IE IS IT LI LT LU MC NL PL PT RO SE SI SK TR**

(30) Priorité: **27.02.2004 FR 0450388**

(43) Date de publication de la demande:
**31.08.2005 Bulletin 2005/35**

(73) Titulaire: **Peugeot Citroën Automobiles SA**
**78140 Vélizy-Villacoublay (FR)**

(72) Inventeurs:
• **Audoin Arnaud**
**75003 PARIS (FR)**

• **Sassi Alain**
**78180 MONTIGNY LE BRETONNEUX (FR)**

(74) Mandataire: **Ménès, Catherine**
**Peugeot Citroën Automobiles SA**
**PI (LG081)**
**18, rue des Fauvelles**
**92250 La Garenne-Colombes (FR)**

(56) Documents cités:
**EP-A- 1 384 866       US-A- 5 595 060**
**US-A- 5 735 119       US-A1- 2001 032 456**

EP 1 568 863 B1

**Description**

La présente invention se rapporte à un procédé de diagnostic d'un catalyseur traitant les gaz d'échappement d'un moteur thermique et à un véhicule mettant en oeuvre ce procédé, notamment à l'aide d'un piège à oxydes d'azote destiné à réduire le taux d'oxydes d'azote présents dans ces gaz d'échappement.

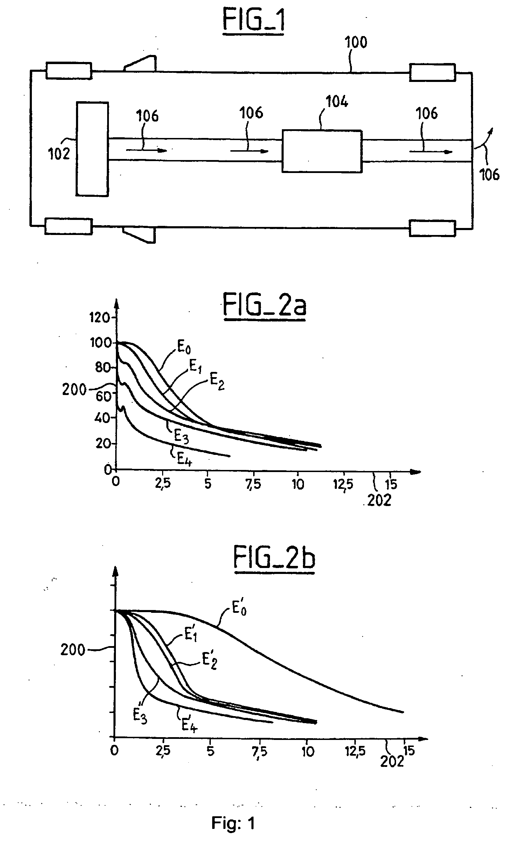

Il est connu d'équiper un véhicule 100 (figure 1) avec un catalyseur destiné à traiter les gaz 106 d'échappement émis par son moteur 102, ce catalyseur pouvant être du type piège 104 à oxydes d'azotes (NOx).

Dans ce cas, ce piège 104 est formé de matériaux présentant une affinité vis-à-vis des oxydes d'azote afin, dans un premier temps, de retenir ces derniers lorsque les gaz 106 traversent le piège 104 puis, dans un second temps, de permettre leur réduction en azote ($N_2$). De fait, un tel piège 104 alterne deux modes de fonctionnement, caractéristiques du piège à oxydes d'azote, décrits en détail ci-dessous :

- Un premier mode de fonctionnement correspond à un stockage des oxydes d'azote au cours duquel le piège 104 capte ces derniers dans les gaz 106 d'échappement.

Ce mode correspond à un fonctionnement dit « pauvre » du moteur tel que l'oxygène est en excès par rapport au carburant. Dans ce cas, la richesse r du mélange, égale au rapport de la quantité de carburant sur la quantité d'oxygène, est inférieure à 1.

Lors de ce premier mode de fonctionnement, le stockage en oxydes d'azote est limité par la capacité de stockage du piège 104 qui peut être définie comme la masse $M_{ax}$ maximale d'oxydes d'azote que ce piège 104 peut capter.

En considérant la masse de NOx entrante $M_{ent}(t)$ et la masse de NOx sortante $M_{sort}(t)$ à un instant t donné, l'efficacité E(t) de stockage du piège 104 peut être définie comme la différence entre la masse entrante $M_{ent}(t)$ et la masse sortante $M_{sort}(t)$ d'oxydes d'azote effectivement stockée dans le piège 104, rapportée sur la masse entrante $M_{ent}(t)$ d'oxydes d'azote.

Une telle définition correspond alors à la formule (1) suivante:

$$E(t) = \frac{M_{ent}(t) - M_{sort}(t)}{M_{ent}(t)}$$

(1)

Cette formule (1) reflète la décroissance de l'efficacité E(t) d'un piège à oxydes d'azote au fur et à mesure que la masse M(t) d'oxydes d'azote stockée tend vers la masse $M_{ax}(T)$ maximale d'oxydes d'azote pouvant être stockée.

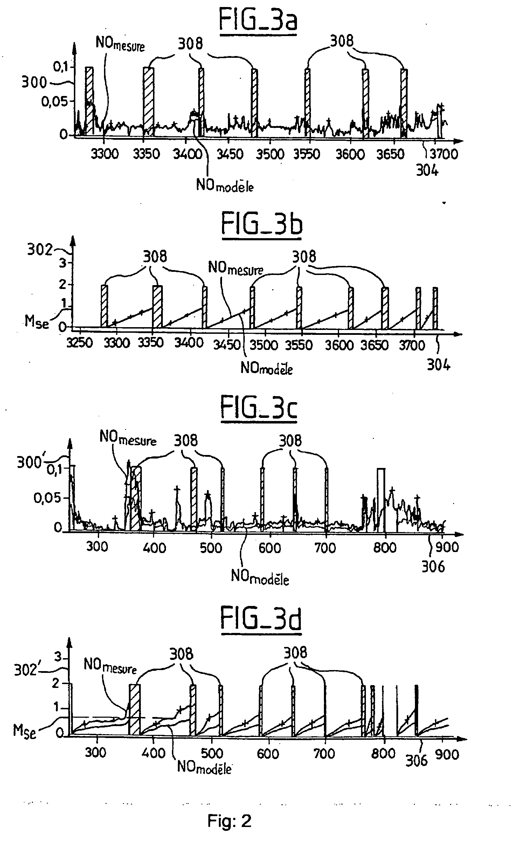

Cette décroissance est empiriquement mesurable comme le montrent les figures 2a et 2b qui représentent l'efficacité E(t) (axe des ordonnées 200, en pourcentage) du piège 104 à oxydes d'azote en fonction de la masse (axe des abscisses 202, en gramme) d'oxydes d'azote stockée dans ce piège 104.

Par ailleurs, la figure 2a montre également que l'efficacité E(t) du piège à oxydes d'azote diminue aussi lorsque la quantité de soufre (S) captée par le piège augmente dans ce dernier, cette diminution étant due un abaissement de la capacité de stockage du piège.

De fait, des efficacités $E_0$, $E_1$, $E_2$, $E_3$ et $E_4$, respectivement mesurées pour des pièges ayant un taux de soufre proche de 0, 1, 2, 3 et 4 grammes par litre, sont décroissantes pour une même quantité d'oxydes d'azote stockée.

C'est pourquoi, il est nécessaire d'effectuer des opérations de déstockage du soufre à intervalles réguliers afin de récupérer de la capacité de stockage.

Toutefois, de telles opérations de déstockage du soufre présentent l'inconvénient de diminuer de façon irréversible la capacité de stockage, et donc l'efficacité, du piège à long terme comme montré ci-dessous à l'aide de la figure 2b qui représente des efficacités $E'_0$, $E'_1$, $E'_2$, $E'_3$ et $E'_4$, mesurées pour des pièges ayant subi des nombres croissants de cycles de stockage/déstockage de soufre (respectivement 0, 5, 10, 18 et 30), ces efficacités étant d'autant plus faibles que ce nombre de cycles est élevé.

De fait, ces opérations de déstockages de soufre soumettent le piège à des hautes températures (supérieures à 600°C) pendant une période généralement comprise entre 4 et 20 minutes, ce qui provoque des dégradations, dénommées vieillissement thermique, de la phase catalytique du piège.

C'est pourquoi, il est connu de contrôler la fréquence des déstockages de soufre d'un piège en déterminant la quantité de soufre reçue par ce dernier à partir de la consommation du véhicule et d'un taux de soufre attribué au carburant.

- Un second mode de fonctionnement du piège 104 correspond à la réduction en azote (N$_2$) des oxydes d'azote captés par ce piège, ces derniers réagissant avec les réducteurs (HC : hydrocarbures, CO : monoxyde de carbone et H$_2$ : hydrogène) fournis par le moteur 102 via les gaz 106 d'échappement.

Pour cela, la quantité de réducteurs fournie au piège 104 est accrue à l'aide d'un fonctionnement dit « riche » du moteur 102, la quantité de carburant introduite dans le moteur étant en quantité supérieure à la quantité d'oxygène par rapport aux conditions stoechiométriques, la richesse r du mélange étant supérieure à 1.

Ce mode de déstockage requiert une bonne détermination de la quantité d'oxydes d'azote présente dans le piège 104 afin de commander le moteur de telle sorte qu'il fournisse la richesse, dénommée r, optimale, défini comme le rapport entre la quantité d'oxygène (oxydant) et la quantité de réducteurs (HC, CO et H$_2$) dans les gaz d'échappement.

En effet, si l'oxygène est en défaut vis-à-vis des réducteurs, ces derniers sont émis dans l'environnement, tandis que la réduction des oxydes d'azote serait incomplète par défaut de réducteurs si l'oxygène était en excès.

Cette détermination est effectuée actuellement à l'aide d'un modèle de fonctionnement du piège 104 qui vise à prédéterminer la capacité de stockage de ce dernier en fonction, par exemple, du nombre de déstockages d'oxydes d'azote ou de soufre, afin de décider de façon optimale de nouvelles opérations de déstockages.

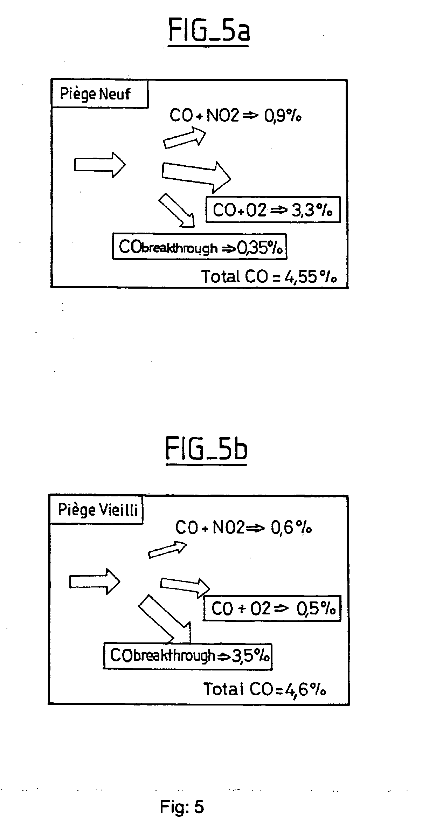

La présente invention résulte de la constatation que la capacité d'oxydation d'un catalyseur varie fortement au cours du fonctionnement du piège à oxydes d'azote, comme montré ultérieurement à l'aide des figures 5a et 5b.

Ainsi la présente invention concerne un procédé de diagnostic de la capacité de stockage et de la capacité d'oxydation d'un catalyseur de type piège traitant les gaz d'échappement d'un moteur thermique, le piège stockant puis réduisant les oxydes d'azote compris dans ces gaz d'échappement, caractérisé en ce que la capacité d'oxydation du piège est déterminée en mesurant les variations de niveau des signaux électriques émis par une sonde du type tout ou rien, dite « ON/OFF », soumise aux gaz d'échappement et disposée en aval du piège.

Un tel procédé présente l'avantage de permettre une mesure simple à mettre en oeuvre de la capacité d'oxydation d'un piège à oxydes d'azote à l'aide de moyens présentant un coût limité comme une sonde mesurant un rapport d'oxygène dans des gaz d'échappement.

Selon un mode de réalisation, le niveau du signal est fonction de la quantité d'hydrocarbures ou de réducteurs présents dans les gaz d'échappement.

Dans un mode de réalisation, on détermine une capacité de stockage du piège en considérant la durée nécessaire pour que la sonde détecte un rapport d'oxygène seuil dans ces gaz lors d'une réduction des oxydes d'azote.

Selon un mode de réalisation, on utilise une sonde lambda pour déterminer la durée à considérer en mesurant le rapport d'oxygène dans les gaz d'échappement en aval du piège.

Dans un mode de réalisation, on utilise une sonde lambda en amont du piège pour déterminer la durée considérée à partir d'un signal transmis par cette sonde en amont du piège.

Selon un mode de réalisation, on commande un déstockage de soufre du piège lorsque la durée mesurée atteint une durée seuil.

Dans un mode de réalisation, on commande un déstockage d'oxydes d'azote (NOx) du piège successivement à un déstockage de souffre de telle sorte que, si la durée nécessaire pour détecter un rapport d'oxygène seuil atteint une durée seuil, on diminue la valeur de la capacité de stockage du piège considérée.

Selon un mode de réalisation, le niveau du signal transmis par la sonde est considéré en Volt.

L'invention concerne aussi un véhicule muni de moyens de diagnostic de la capacité de stockage et d'oxydation d'un catalyseur de type piège traitant les gaz d'échappement d'un moteur thermique, le piège stockant puis réduisant les oxydes d'azote compris dans ces gaz d'échappement, caractérisé en ce qu'il comprend des moyens pour mesurer le rapport d'oxygène présent dans les gaz d'échappement en aval du piège au moyen d'une sonde de type tout ou rien, dite « ON/OFF », soumise aux gaz d'échappement et située en aval du piège, ladite sonde délivrant des signaux électriques, et en ce qu'il comprend des moyens pour déterminer la capacité d'oxydation du piège en considérant le niveau desdits signaux électriques émis par cette sonde selon un procédé conforme à l'une des revendications précédentes.

D'autres caractéristiques et avantages de l'invention apparaîtront avec la description effectuée ci-dessus, à titre d'exemple illustratif et non limitatif, en se référant aux figures ci-jointes sur lesquelles :

- La figure 1, déjà décrite représente schématiquement un traitement connu des gaz d'échappement d'un moteur thermique par un piège à oxydes d'azote,
- Les figures 2a et 2b, déjà décrites, représentent des variations d'efficacité d'un piège à oxydes d'azote,

- Les figures 3a, 3b, 3c et 3d illustrent les différences entre le fonctionnement réel et le fonctionnement prédéterminé ou modélisé d'un piège à oxydes d'azote,
- La figure 4a représente schématiquement un traitement conforme à l'invention des gaz d'échappement d'un moteur thermique par un piège à oxydes d'azote,
- Les figures 4b et 4c sont des diagrammes illustrant le lien entre le signal fourni par une sonde lambda et la capacité de stockage d'un piège,
- Les figures 5a et 5b représentent les différentes réactions du monoxyde de carbone fourni par un moteur en mode riche pour un piège à oxydes d'azote neuf et un piège usé, et
- Les figures 6a, 6b et 6c représentent des variations d'un signal émis par une sonde mesurant le rapport $\lambda$ d'oxygène dans les gaz d'échappement en amont d'un piège à oxydes d'azote.

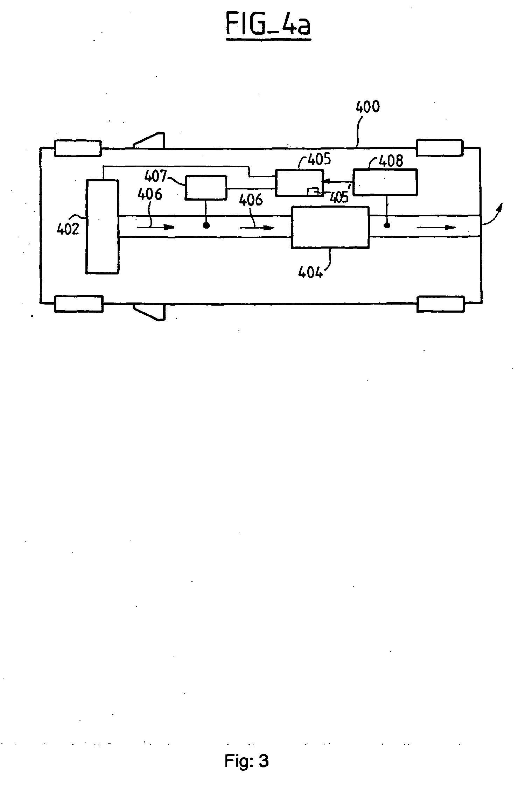

Comme indiqué précédemment, la dérive de fonctionnement d'un piège à oxydes d'azote peut atteindre des valeurs élevées telles que montrées ci-dessous à l'aide des figures 3a et 3b, relatives à un piège à oxydes d'azote neuf, et 3c et 3d, relatives à ce même piège après une utilisation importante de ce dernier, par exemple après 10 à 20 séquences de stockage / déstockage de soufre.

Sur la figure 3a sont représentées des mesures instantanées relatives aux masses (axe 300 des ordonnées, en gramme par seconde) d'oxydes d'azote captées par le piège considéré tandis que sur la figure 3b est représentée l'évolution de la masse totale d'oxydes d'azote stockée dans ce piège (axe 302 des ordonnées, en gramme) selon une même chronologie (axe 304, en secondes).

De plus, les périodes 308 de déstockages des oxydes d'azote, déclenchées lorsque la masse d'oxydes d'azote stockée dépasse une valeur $M_{se}$ seuil, sont aussi représentées.

Lorsque le piège considéré est neuf, les masses mesurées (courbe $NO_{mesure}$) correspondent aux masses prédéterminées par un modèle (courbe $NOx_{modèle}$) de fonctionnement du piège.

Toutefois, après une utilisation importante du piège, les masses mesurées (courbe $NOx_{mesure}$) diffèrent fortement - jusqu'à 50% de différence - des masses prédéterminées (courbe $NOx_{modèle}$) par le modèle de fonctionnement du piège, comme montré à l'aide des figures 3c et 3d qui représentent, respectivement, des mesures (courbe $NO_{mesure}$) relatives à la masse (axe 300' des ordonnées, en gramme par seconde) d'oxydes d'azote captées par ce piège usé et à la masse d'oxydes d'azote stockée (axe 302' des ordonnées, en gramme) dans ce piège usé, selon une même chronologie (axe 306, en secondes), ainsi que les mesures prédéterminées (courbe $NOx_{modèle}$).

C'est pourquoi on détermine régulièrement la capacité de stockage du piège pour, notamment, déterminer la fréquence des déstockages de façon optimale et limiter ainsi son usure.

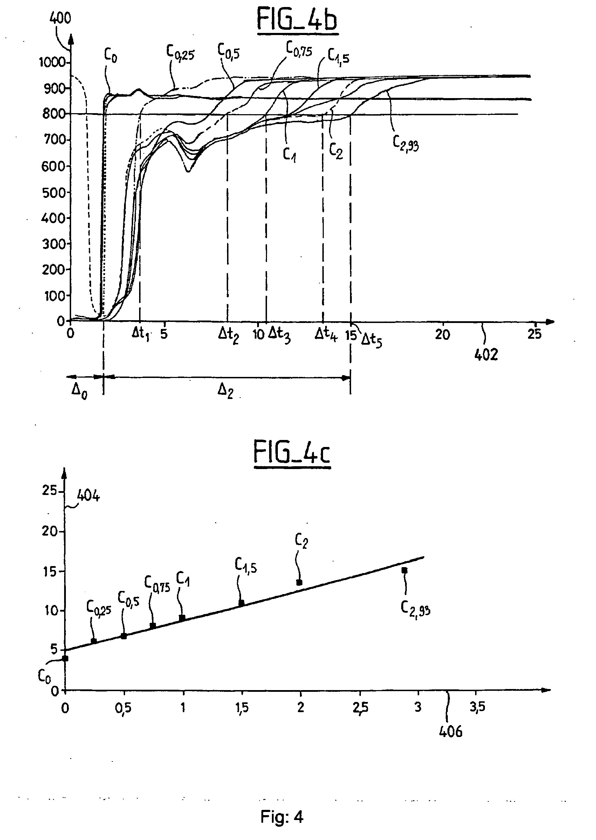

Dans cette réalisation, cette détermination utilise la constatation selon laquelle le signal fourni par une sonde sensible à la quantité d'oxygène dans les gaz d'échappement, telle qu'une sonde lambda ou une sonde steochiométrique, peut être indicatif de la capacité de stockage d'un piège à oxydes d'azote lorsque cette sonde est située en aval du piège, comme détaillé ultérieurement à l'aide des figures 4b et 4c.

De fait, l'invention utilise dans cet exemple la constatation selon laquelle, au cours de son fonctionnement, la variation de la capacité de stockage d'un piège à oxydes d'azote, précédemment décrite à l'aide des figures 2a et 2b, peut être telle que le fonctionnement du piège diffère significativement de sa modélisation, comme décrit à l'aide des figures 3a, 3b, 3c et 3d.

Or la présence d'une telle différence, ou dérive, du piège empêche sa gestion optimale, notamment vis-à-vis des déstockages commandés, de telle sorte que le taux d'oxydes d'azote à l'échappement peut s'accroître, au cours du fonctionnement du moteur, au-delà de seuils préalablement respectés.

La présente invention résulte aussi de la constatation qu'une telle dérive est imprévisible étant donnée que le taux en soufre du carburant utilisé par un véhicule est variable, par exemple d'un pays à un autre.

A cet effet, un véhicule 400 (figure 4a) peut être muni d'un piège 404 traitant les gaz 406 d'échappement émis par son moteur 402 et d'un processeur 405 muni de moyens 405' destiné à diagnostiquer le piège 404 conformément à l'invention.

Pour cela, ce processeur 405 peut déterminer la quantité d'oxydes d'azote stockée dans le piège au moyen de sondes 407 et 408 lambda situées, respectivement, en amont et en aval du piège 404.

De fait, comme montré sur la figure 4b, chacune de ces sondes fournit un signal électrique « $\lambda$ ON/OFF » dont la tension (axe des ordonnes 400, en mV) est faible lorsque le moteur fonctionne en mode pauvre (piriode $\Delta_0$) ou maximale lorsque le moteur fonctionne en mode riche (piriode $\Delta_2$).

De fait, une sonde lambda fournit un signal électrique en fonction de la quantité d'oxygène dans les gaz considérés. Or, pendant le fonctionnement du moteur en mode riche, ce rapport augmente sensiblement en aval du piège puisque ce dernier utilise les hydrocarbures compris dans ces gaz pour réduire les oxydes d'azote

Cependant, le signal ($C_{amont}$) de la sonde en amont du piège est indépendante de la quantité d'oxydes d'azote stockés dans le piège ce qui permet de déterminer l'initialisation du déstockage du piège.

Il convient cependant de noter que cette sonde amont n'est pas nécessaire pour la mise en oeuvre de l'invention puisqu'elle n'est pas influencée par le déstockage des NOx. Selon une réalisation, un modèle simple permet de simuler le comportement de cette sonde sur un véhicule.

A partir de cette initialisation, on peut mesurer la durée $\Delta t_i$ nécessaire pour que le niveau du signal ($C_{aval}$) de la sonde en aval du piège atteigne une valeur seuil, de 800 mV dans cet exemple, cette durée étant fonction de la quantité d'oxydes d'azote comprise dans les gaz considérés comme précédemment expliqué.

Sur la figure 4b sont ainsi représentées des courbes Ci qui correspondent aux signaux obtenus pour des pièges présentant une quantité d'oxydes d'azote stockée, é tant considérée en grammes par litres.

Une telle relation est plus clairement mise en évidence sur la figure 4c qui représente les durées 404 (axe des ordonnées 404, en secondes) nécessaires à un déstockage de la quantité d'oxydes d'azote d'un piège en fonction de cette quantité de NOx (axe 406 des abscisses, en g/l) présente dans ce piège.

Lorsque la durée nécessaire au déstockage des oxydes d'azote traduit une faible capacité de stockage, le processeur 405 de diagnostic du piège peut considérer que ce dernier est empoisonné par le soufre et commander un déstockage de soufre.

A la suite de ce déstockage de soufre, si la durée nécessaire au déstockage des oxydes d'azote traduit à nouveau une faible capacité de stockage du piège, le processeur 405 considère que la capacité de stockage du piège à diminuée suite à son usure thermique (dégradation non réversible et définitive).

Dans ce cas, grâce à la durée de déstockage mesurée, le processeur 405 peut évaluer à nouveau cette capacité de stockage pour déterminer le rapport oxygène / réducteurs optimal des gaz à envoyer lors des déstockages des oxydes d'azote.

A ce stade, il convient d'indiquer que le piège 404 est généralement composé d'un support imprégné d'une phase active dénommée Wash-Coat composée, d'une part, de métaux précieux (Platine, Palladium, Rhodium) qui permettent la catalyse des réactions d'oxydation et de réduction et, d'autre part, d'oxydes de métaux permettant la stabilisation des métaux précieux et le stockage / déstockage d'oxygène.

Par ailleurs, le support est constitué de cordiérite ou d'alliage métallique et il se présente généralement sous la forme d'une structure en "nid d'abeille".

Dans cette réalisation de l'invention, on utilise aussi la constatation que la capacité d'oxydation d'un catalyseur varie fortement au cours du fonctionnement du piège à oxydes d'azote, comme montré ci-dessous à l'aide des figures 5a et 5b.

Sur la figure 5a sont indiquées les rapports dans lesquels le monoxyde de carbone (CO) émis par un moteur thermique est traité et converti par un piège à oxydes d'azote neuf.

Ainsi, 20% de ce monoxyde de carbone (CO) réagit avec de l'oxyde d'azote (NOx), 70% de ce monoxyde de carbone réagit avec de l'oxygène (02) et moins de 10% de ce monoxyde de carbone est émis dans l'environnement, ce qui représente un fonctionnement optimal du système moteur / post-traitement.

Or, comme montré sur la figure 5b, l'utilisation du même piège à oxydes d'azote usé, avec des gaz d'échappement présentant un même rapport $\lambda$ d'oxygène / réducteurs, provoque que 13% du monoxyde de carbone réagisse avec des oxydes d'azote, 10% de ce monoxyde de carbone réagisse avec de l'oxygène tandis que plus de 75% du monoxyde de carbone produit est émis dans l'environnement, ce qui représente un fonctionnement du piège insuffisant vis-à-vis de certaines normes relatives aux gaz d'échappement.

De fait, la capacité d'oxydation d'un piège diminue avec l'augmentation de son usure de telle sorte que, pour un fonctionnement optimal de ce piège, il convient d'augmenter le rapport $\lambda$ d'oxygène / réducteurs dans les gaz d'échappement parallèlement à l'augmentation de son usure.

C'est pourquoi, selon cet aspect de l'invention, on évalue la capacité d'oxydation d'un piège à oxydes d'azote de façon régulière pour adapter le rapport $\lambda$ d'oxygène dans les gaz d'échappement.

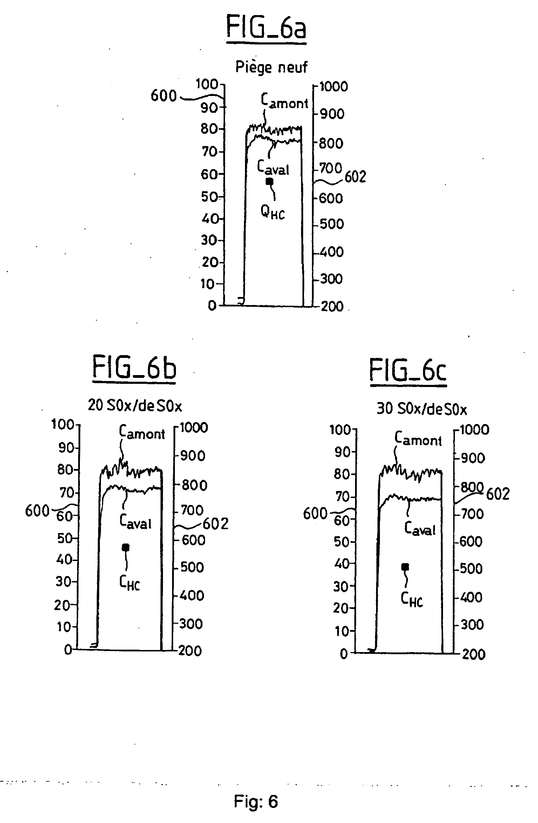

A cet effet, le processeur 405 utilise la variation de la valeur maximale du signal électrique « $\lambda$ ON/OFF » fourni par la sonde 408 puisque, comme décrit ci-dessous à l'aide des figures 6a, 6b et 6c, la valeur de ce signal est dépendante de la quantité d'hydrocarbures présents dans ces gaz pour un rapport $\lambda$ donné des gaz d'échappement.

Sur ces figures 6a, 6b et 6c sont représentées les valeurs de la tension du signal électrique « $\lambda$ ON/OFF » (axe des ordonnées 602, en mV), fourni par la sonde 408, en fonction du taux d'oxydation des hydrocarbures (HC) mesuré expérimentalement pour des niveaux croissants d'usure du piège à oxydes d'azote considéré.

Ce signal est généré en amont (courbe $C_{amont}$), et en aval (courbe $C_{aval}$) du piège par une sonde non représentée,ce qui permet de constater que la valeur de cette tension amont est indépendante de la quantité d'hydrocarbures présents en aval dans les gaz d'échappement.

Toutefois, on constate que la tension du signal fourni par la sonde 408 en aval du piège diminue en fonction de la quantité d'hydrocarbures présents dans les gaz 406, cette quantité étant d'autant plus importante que le taux $Q_{HC}$ (axe des ordonnées 600, en pourcentage d'hydrocarbures oxydés) de conversion des hydrocarbures diminue.

Cette variation du signal émis par la sonde 408 peut s'expliquer en rappelant que la mesure du taux d'oxygène par une sonde $\lambda$ en aval du piège à oxydes d'azote s'effectue, théoriquement, après oxydation de tous les réducteurs compris dans ces gaz d'échappement.

Cependant, la vitesse de diffusion des hydrocarbures au sein du piθge 404 est plus faible que celle des autres composants, et notamment de l'oxygone de telle sorte que, lorsque le rapport λ est mesuré en aval du piège 404, ce rapport λ est d'autant plus faible que la quantité d'hydrocarbures est élevée.

Ainsi, il est possible de déterminer le taux de conversion des hydrocarbures par le piège en fonction du signal « λ ON/OFF » émis par la sonde 408, ce taux de conversion permettant de déterminer la capacité d'oxydation du piège.

Dès lors, en détectant une diminution de la capacité d'oxydation du piège, un processeur 405 conforme à l'invention peut commander une augmentation du rapport λ dans les gaz d'échappement afin de maintenir le fonctionnement du piège dans des conditions optimales.

Dans l'Art Connu, on a proposé des procédés de diagnostic d'un catalyseur de type piège NOx à l'aide d'une sonde détectant le niveau d'oxygène dans les gaz d'échappement et notamment les procédés divulgués par les demandes ou brevet suivants :

- EP 1 384 866 A1 (YANMAR CO, LTD) ;
- US 2001/032456 (YONEKURA TOSIAKI et al.) ; et
- US 5 735 119 A (ASANUMA et al.).

Aucun de ces documents ne divulgue un procédé de diagnostic de la capacité d'oxydation du piège basé sur la mesure des variations de niveau des signaux électriques émis par la sonde.

## Revendications

**1.** Procédé de diagnostic de la capacité de stockage et d'oxydation d'un catalyseur de type piège (404) traitant les gaz d'échappement (406) d'un moteur thermique (402), lesdits gaz pouvant contenir des oxydes d'azote (NOx), des hydrocarbures (HC) et du monoxyde de carbone (CO), le piège stockant puis réduisant les oxydes d'azote (NOx) compris dans ces gaz d'échappement (406), **caractérisé en ce que** la capacité du piège pour stocker des NOx et oxyder des hydrocarbures (HC) et du monoxyde de carbone (CO) est déterminée en mesurant les variations de la valeur maximale du niveau des signaux électriques émis par une sonde (408) du type tout ou rien, dite « ON/OFF », soumise aux gaz d'échappement (406) et disposée en aval du piège (404).

**2.** Procédé selon la revendication 1 **caractérisé en ce que** le niveau des signaux électriques émis par la sonde de type tout ou rien (408) est fonction de la quantité d'hydrocarbures ou de réducteurs présents dans les gaz d'échappement (406).

**3.** Procédé selon l'une des revendications 1 ou 2, **caractérisé en ce que** la sonde du type tout ou rien est une sonde lambda (408) et **en ce qu'**il comprend évaluation régulière de la capacité d'oxydation du piège de manière à augmenter le rapport I d'oxygène dans les gaz d'échappement (406) et à optimiser le fonctionnement du piège (404) lors de la détection d'une diminution de ladite capacité d'oxydation.

**4.** Procédé selon l'une des revendications 1 ou 2 **caractérisé en ce qu'**on détermine une capacité de stockage du piège en considérant la durée nécessaire pour que la sonde (408) située en aval du piège (404) détecte un rapport d'oxygène seuil dans ces gaz (406) lors d'une réduction des oxydes d'azote (NOx).

**5.** Procédé selon la revendication 4 **caractérisé en ce qu'**on utilise une sonde lambda (408) pour déterminer la durée à considérer en mesurant le rapport d'oxygène dans les gaz d'échappement (406) en aval du piège (404).

**6.** Procédé selon la revendication 1 ou 2 **caractérisé en ce qu'**on utilise une sonde lambda (407) disposée en amont du piège (404) pour déterminer la durée considérée à partir d'un signal transmis par cette sonde (407) en amont du piège.

**7.** Procédé selon la revendication 4, 5 ou 6, **caractérisé en ce qu'**on commande un déstockage de soufre du piège (404) lorsque la durée mesurée atteint une durée seuil.

**8.** Procédé selon la revendication 7 **caractérisé en ce qu'**on commande un déstockage d'oxydes d'azote (NOx) du piège (404) successivement à un déstockage de souffre de telle sorte que, si la durée nécessaire pour détecter un rapport d'oxygène seuil atteint une durée seuil, on diminue la valeur de la capacité de stockage du piège considérée.

**9.** Procédé selon l'une des revendications précédentes **caractérisé en ce que** le niveau du signal transmis par la sonde (408) est considérée en Volt.

10. Véhicule (400) muni de moyens de diagnostic de la capacité de stockage et d'oxydation d'un catalyseur de type piège (404) traitant les gaz d'échappement (406) d'un moteur thermique (402), le piège (404) stockant puis réduisant les oxydes d'azote (NOx) compris dans ces gaz d'échappement (406), **caractérisé en ce qu'**il comprend des moyens (405, 405') pour mesurer le rapport d'oxygène présent dans les gaz d'échappement en aval du piège au moyen d'une sonde (408) de type tout ou rien, dite « ON/OFF », soumise aux gaz d'échappement (406) et située en aval du piège (404), ladite sonde (408) délivrant des signaux électriques, et **en ce qu'**il comprend des moyens (405, 405') pour déterminer la capacité d'oxydation du piège (404) en considérant le niveau desdits signaux électriques émis par cette sonde (408) selon un procédé conforme à l'une des revendications précédentes

## Claims

1. Method for checking the storage and oxidizing capacity of a trap-type catalytic converter (404) treating exhaust gases (406) of an internal combustion engine (402), which said gases may contain oxides of nitrogen (NOx), hydrocarbons (HC) and carbon monoxide (CO), the trap storing then reducing the oxides of nitrogen (NOx) included in these exhaust gases (406), **characterized in that** the capacity of the trap to store NOx and oxidize hydrocarbons (HC) and carbon monoxide (CO) is determined by measuring the variations in the maximum value of the level of the electrical signals emitted by a sensor (408) of the all-or-nothing type, known as an "ON-OFF" sensor, exposed to the exhaust gases (406) and disposed downstream of the trap (404).

2. Method according to Claim 1, **characterized in that** the level of the electrical signals emitted by the on-off sensor (408) depends on the quantity of hydrocarbons or reducing agents present in the exhaust gases (406).

3. Method according to either of Claims 1 or 2, **characterized in that** the on-off sensor is a lambda sensor (408) and **in that** it includes regular evaluation of the oxidizing capacity of the trap so as to increase the oxygen ratio I in the exhaust gases (406) and improve the operation of the trap (404) when a decrease in the said oxidizing capacity is detected.

4. Method according to either of Claims 1 or 2, **characterized in that** a storage capacity of the trap is determined by taking into account the time required for the sensor (408) located downstream of the trap (404) to detect a threshold oxygen ratio in these gases (406) when the oxides of nitrogen (NOx) are reduced.

5. Method according to Claim 4, **characterized in that** a lambda sensor (408) is used to determine the time to be taken into account when measuring the oxygen ratio in the exhaust gases (406) downstream of the trap (404).

6. Method according to Claim 1 or 2, **characterized in that** a lambda sensor (407) disposed upstream of the trap (404) is used to determine the time taken into account starting with a signal transmitted by this sensor (407) upstream of the trap.

7. Method according to Claim 4, 5 or 6, **characterized in that** a clearance of sulphur from the trap (404) is activated when the measured time reaches a time limit.

8. Method according to Claim 7, **characterized in that** a clearance of oxides of nitrogen (NOx) from the trap (404) is activated after a clearance of sulphur so that, if the time required to detect a threshold oxygen ratio reaches a time limit, the value of the storage capacity of the trap taken into account is decreased.

9. Method according to one of the preceding claims, **characterized in that** the level of the signal transmitted by the sensor (408) is taken into account in volts.

10. Vehicle (400) provided with means of checking the storage and oxidizing capacity of a trap-type catalytic converter (404) treating the exhaust gases (406) of an internal combustion engine (402), the trap (404) storing then reducing the oxides of nitrogen (NOx) included in these exhaust gases (406), **characterized in that** it comprises means (405, 405') for measuring the oxygen ratio present in the exhaust gases downstream of the trap by means of an all-or-nothing type of sensor (408), known as an ON-OFF sensor, exposed to the exhaust gases (406) and located downstream of the trap (404), the said sensor (408) sending electrical signals, and **in that** it comprises means (405, 405') for determining the oxidizing capacity of the trap (404) by taking into account the level of the said electrical signals emitted by this sensor (408) according to a method in accordance with one of the preceding claims.

**Patentansprüche**

1. Verfahren zur Diagnose der Lager- und Oxydationskapazität eines Katalysators des Typs mit Falle (404), der Abgase (406) eines Verbrennungsmotors (402) aufbereitet, wobei die Gase Stickstoffoxide (NOx), Kohlenwasserstoffe (HC) und Kohlenmonoxid (CO) enthalten können, wobei die Falle die Stickstoffoxide (NOx), die in diesen Abgasen (406) enthalten sind, lagert und dann reduziert, **dadurch gekennzeichnet, dass** die Kapazität der Falle zum Lagern der NOx und Oxidieren der Kohlenwasserstoffe (HC) und des Kohlenmonoxids (CO) durch Messen der Variationen des Höchstwerts des Niveaus der elektrischen Signale, die von einer Sonde (408) des Typs Alles-oder-Nichts, "ON/OFF" genannt, die den Abgasen (406) ausgesetzt und stromabwärts der Falle (404) angeordnet ist, gesendet werden, bestimmt wird.

2. Verfahren nach Anspruch 1, **dadurch gekennzeichnet, dass** das Niveau der elektrischen Signale, die von der Sonde des Typs Alles-oder-Nichts (408) abgegeben werden, von der Menge an Kohlenwasserstoffen oder Reduktoren abhängt, die in den Abgasen (406) enthalten sind.

3. Verfahren nach einem der Ansprüche 1 oder 2, **dadurch gekennzeichnet, dass** die Sonde des Typs Alles-oder-Nichts eine Lambdasonde (408) ist, und dass es das regelmäßige Beurteilen der Oxidationskapazität der Falle derart aufweist, dass das Verhältnis I an Sauerstoff in den Abgasen (406) erhöht und der Betrieb der Falle (404) beim Erfassen einer Verringerung der Oxidationskapazität optimiert wird.

4. Verfahren nach einem der Ansprüche 1 oder 2, **dadurch gekennzeichnet, dass** man eine Lagerkapazität der Falle bestimmt, indem man die Dauer betrachtet, die erforderlich ist, damit die Sonde (408), die sich stromabwärts der Falle (404) befindet, ein Schwellensauerstoffverhältnis in diesen Gasen (406) bei einer Reduktion der Stickstoffoxide (NOx) erfasst.

5. Verfahren nach Anspruch 4, **dadurch gekennzeichnet, dass** man eine Lambdasonde (408) verwendet, um die Dauer zu bestimmen, die zu berücksichtigen ist, indem man das Sauerstoffverhältnis in den Abgasen (406) stromabwärts der Falle (404) misst.

6. Verfahren nach Anspruch 1 oder 2, **dadurch gekennzeichnet, dass** man eine Lambdasonde (407) verwendet, die stromaufwärts der Falle (404) angeordnet ist, um die zu berücksichtigende Dauer ausgehend von einem Signal, das von dieser Sonde (407) stromaufwärts der Falle übertragen wird, zu bestimmen.

7. Verfahren nach Anspruch 4, 5 oder 6, **dadurch gekennzeichnet, dass** man ein Schwefelauslagern der Falle (404) steuert, wenn die gemessene Dauer eine Schwellenwertdauer erreicht.

8. Verfahren nach Anspruch 7, **dadurch gekennzeichnet, dass** man ein Stickstoffoxidauslagern (NOx) der Falle (404) im Anschluss an ein Schwefelauslagern derart steuert, dass, wenn die zum Erfassen eines Schwellensauerstoffverhältnisses erforderliche Dauer eine Schwellenwertdauer erreicht, man den Wert der Lagerkapazität der betreffenden Falle verringert.

9. Verfahren nach einem der vorhergehenden Ansprüche, **dadurch gekennzeichnet, dass** das Niveau des von der Sonde (408) übertragenen Signals in Volt betrachtet wird.

10. Fahrzeug (400), das mit Mitteln zur Diagnose der Lager- und Oxidationskapazität eines Katalysators des Typs mit Falle (404) versehen ist, der die Abgase (406) eines Verbrennungsmotors (402) aufbereitet, wobei die Falle (404) die Stickstoffoxide (NOx), die in den Abgasen (406) enthalten sind, lagert und dann reduziert, **dadurch gekennzeichnet, dass** es Mittel (405, 405') zum Messen des Sauerstoffverhältnisses, das in den Abgasen stromabwärts der Falle gegenwärtig ist, mittels einer Sonde (408) des Typs Alles-oder-Nichts, "ON/OFF" genannt, die den Abgasen (406) ausgesetzt ist und sich stromabwärts der Falle (404) befindet, aufweist, wobei die Sonde (408) elektrische Signale liefert, und dass es Mittel (405, 405') aufweist, um die Oxidationskapazität der Falle (404) unter Berücksichtigung des Niveaus der elektrischen Signale, die von dieser Sonde (408) gesendet werden, gemäß einem Verfahren nach einem der vorhergehenden Ansprüche zu bestimmen.

## FIG_1

## FIG_2a

## FIG_2b

Fig: 1

## FIG_3a

## FIG_3b

## FIG_3c

## FIG_3d

Fig: 2

## FIG_4a

Fig: 3

## FIG_4b

## FIG_4c

Fig: 4

## FIG_5a

Piège Neuf

CO + NO2 ⇒ 0,9%

CO+O2 ⇒ 3,3%

CObreakthrough ⇒ 0,35%

Total CO = 4,55%

## FIG_5b

Piège Vieilli

CO + NO2 ⇒ 0,6%

CO + O2 ⇒ 0,5%

CObreakthrough ⇒ 3,5%

Total CO = 4,6%

Fig: 5

## FIG_6a

Piège neuf

## FIG_6b

20 SOx/deSOx

## FIG_6c

30 SOx/deSOx

Fig: 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1384866 A1, YANMAR
- US 2001032456 A, YONEKURA TOSIAKI
- US 5735119 A, ASANUMA